# EUROPEAN PATENT APPLICATION

(11) **EP 2 211 562 A1**
(43) Date of publication of application: **28.07.2010**
(21) Application number: 09151095.8
(22) Date of filing: 22.01.2009
(51) Int. Cl.: H04R 5/02

(54) **Loudspeaker installation**

(71) Applicant: Ford Global Technologies, LLC, Dearborn, MI 48126 (US)
(72) Inventor: Lahti, Hans, 42354, Torslanda (SE)
(74) Representative: Widahl, Jenny Marie

(57) **Abstract**

The present invention relates to an A-pillar (30) for an automobile (10), the A-pillar (30) has at least one electro acoustical transducer arrangement. The arrangement comprises a driver (21) and a driver enclosure (32, 33, 39). The A-pillar exhibits at least one wall (32, 33) defining a volume (39). An enclosure (32, 33, 39) is defined by at least a part of the wall (32, 33) and the volume (39) of the A-pillar (30). The present invention utilizes the interior of the A-pillar (30), or a cavity formed by the A-pillar (30), as the enclosure for the driver (21) thereby providing a high coefficient of utilization of the available space in the automobile.

## Description

### TECHNICAL FIELD

The present invention relates to an A-pillar for an automobile, the A-pillar is provided with an electro acoustical transducer arrangement. The present invention also relates to an automobile having at least one such A-pillar.

### BACKGROUND OF THE INVENTION

A loudspeaker enclosure is a cabinet designed to transmit sound to the listener via mounted loudspeaker drive units. Generally it is believed that the role of the enclosure is to prevent the out-of-phase sound waves from the rear of the speaker from combining with the in-phase sound waves from the front of the speaker. Such mixing results in interference patterns and cancellation, causing the efficiency of the speaker to be reduced, particularly at low frequencies where the wavelengths are large enough that interference will affect substantially the entire listening area.

It is well known to place speakers inside the doors of the vehicle. However, speakers located in doors have been found to be vulnerable to moisture which can penetrate the door sealing; they also tend to give an increased noise leakage through the door.

Sometimes, it is not possible to fit such large drivers and enclosures into doors or dashboards, so usually subwoofers are installed in the trunk or back seat space. The published patent document of EP 0,974,489 discloses a loudspeaker arrangement, where a bass-reflex speaker is arranged in the foot support area of the vehicle and which may be arranged below the floor mat in front of the driver's seat. In this fashion it is attempted to achieve better quality for low frequency sounds and to save compartment space in the front part of the cabin. It has been shown however that dust and dirt can pass the edges of the floor mat and affect the audio quality and functionality of the speaker.

Another example is disclosed in the published patent document of JP03132295 in which a vehicle mounted speaker is described. The speaker itself is installed in the bottom of the car body and connected to a sound conducting pipe arranged to have its end under the dashboard of the vehicle. This speaker arrangement is said to be especially suited for low-frequency speakers. However, this requires additional arrangements which therefore make this solution less attractive. It would seem that there is still room for improvements within this field.

### SUMMARY OF THE INVENTION

The present invention at least partly solves, or reduces, some of the above mentioned drawbacks. More specifically they are at least partly solved, or reduced, by an A-pillar for an automobile, the A-pillar having at least one electro acoustical transducer arrangement, such as a speaker, preferably a subwoofer. The electro acoustical transducer arrangement comprises a driver and a driver enclosure. The A-pillar comprises at least one wall defining a volume, wherein the driver enclosure is at least partly defined or at least partly contained by at least a part of the wall and the volume of the A-pillar.

The present invention provides for a space saving enclosure, which enables an electro acoustical transducer arrangement to be arranged in the front area of an automobile while reducing the risk of damaging the electro acoustical transducer, for example by keeping it in a dry zone. It further provides a high coefficient of utilization of the available space in the automobile. Furthermore, the installation of the electro acoustical transducer is improved as this can be done at a relatively early stage in the assembly process of an automobile. The driver enclosure can be contained or defined by the at least a part of the wall and the volume of the A-pillar.

In an embodiment according to the present invention, the volume of the A-pillar is the interior volume of the A-pillar. This provides for a large volume and easy installation. The volume can optionally be formed by a cavity in the A-pillar. The driver can be a subwoofer, advantageously operating in the low frequency scale, such as below 200 Hz, 190 Hz, 180 Hz, 170 Hz, 160 Hz, 150 Hz, 140 Hz or lower. This has been found to be especially advantageous together with an A-pillar and the vast volume which is required when using low frequency drivers and especially when using the interior volume of the A-pillar.

The A-pillar advantageously comprises a metal. For example at least one of the A-pillar's walls can advantageously be made from metal, such as steel. In any case, the wall of the A-pillar can comprise at least one aperture, the driver can then be arranged to substantially cover the aperture. If the driver comprises a diaphragm, the diaphragm can be positioned to face away or optionally to face towards the interior of the A-pillar.

Generally when the diaphragm is positioned to face towards the interior volume, or towards the cavity of the A-pillar, the frame, basket or chassis extends away from the interior volume or cavity. When the diaphragm faces away from the A-pillar, the frame, basket or chassis is at least partly inserted into the aperture.

The A-pillar can comprise at least 1 driver, at least 2, 3, 4 or more drivers. Optionally the A-pillar can comprise different kinds of drivers such as subwoofers, woofers, tweeters or the like, although it should be noted that drivers operable in the low frequency area, i.e. below 200 Hz are considered to be most favourable.

In an embodiment according to the present invention, the A-pillar has a substantially air tight sealing member arranged between the driver and the A-pillar. This reduces or eliminates the risk of stray sound from the driver enclosure cancelling sound inside the passenger compartment. Sound absorbing material inside or optionally outside of the driver enclosure can also be provided.

The present invention also relates to an automobile comprising at least one, preferably two, A-pillars having at least one electro acoustical transducer arrangement as described herein.

### BRIEF DESCRIPTION OF THE DRAWINGS

The present invention will be described in greater detail with reference to the accompanying figures in which;
figure 1 shows an automobile as seen from above;
figure 2 shows parts of an A-pillar of the vehicle as seen in figure 1;
figure 3 shows a cross section of the A-pillar as seen in figure 2 and;
figure 4 shows the cross section of the A-pillar as seen in figure 3 in greater detail.

### DETAILED DESCRIPTION OF PREFERRED EMBODIMENTS

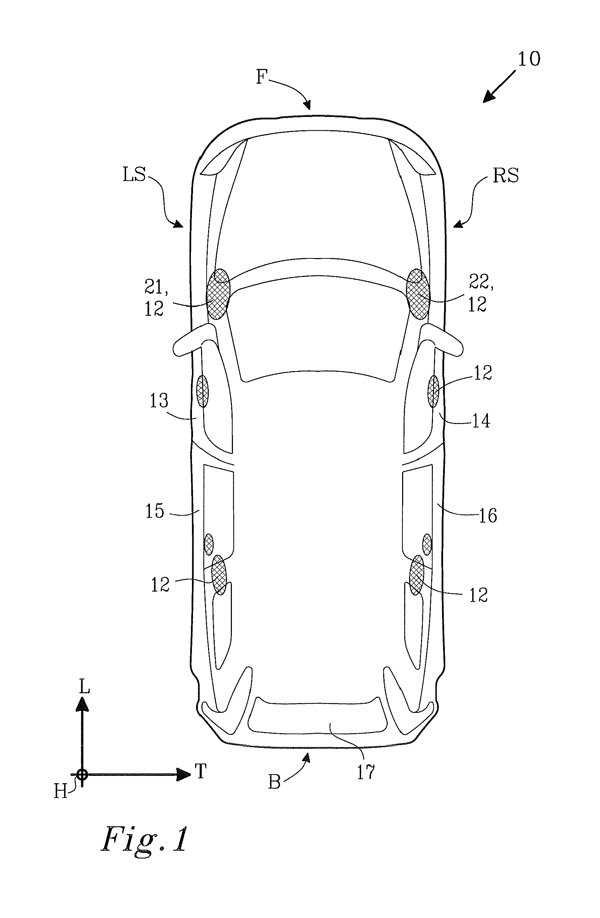

Figure 1 shows a schematic figure of an automobile 10 as seen from above. The automobile 10 has a passenger compartment 11 provided with a set of speakers 12 positioned at selected locations inside the passenger compartment 11. For the sake of orientation, the automobile has a longitudinal direction L, a transverse direction T and a height H, a left side LS, a right side RS, a front F, and a back B. The automobile 10 further has a first and a second front side door 13, 14, a first and a second back side door 15, 16, and a rear compartment door 17. As can be seen in figure 1, each of the front and back doors 13, 14, 15, 16 are equipped with speakers 12. In this case each front and back door 13, 14, 15, 16 is equipped with a 2.5 cm (1 ") tweeter and a 7.6 cm (3") midrange speaker. The sound system of the automobile 10 further comprises, in the non-limiting example shown in figure 1, a first and a second 15.2 cm (6.5") subwoofer 21, 22.

The first and the second subwoofers 21, 22 are for example subwoofers, with a diameter of 15.2 cm (6.5"), nominal power handling of 75 watt, peak power handling 130 watt, sensitivity 88 dB, impedance 4 ohm. Generally the subwoofer will operate below 200 Hz. Subwoofers with a 10.2 cm (4"), 12.7 cm (5"), 20.3 cm (8"), 25.4 cm (10"), 30.5 cm (12"), 38.1 cm (15") and 45.7 cm (18") diameter can also be used.

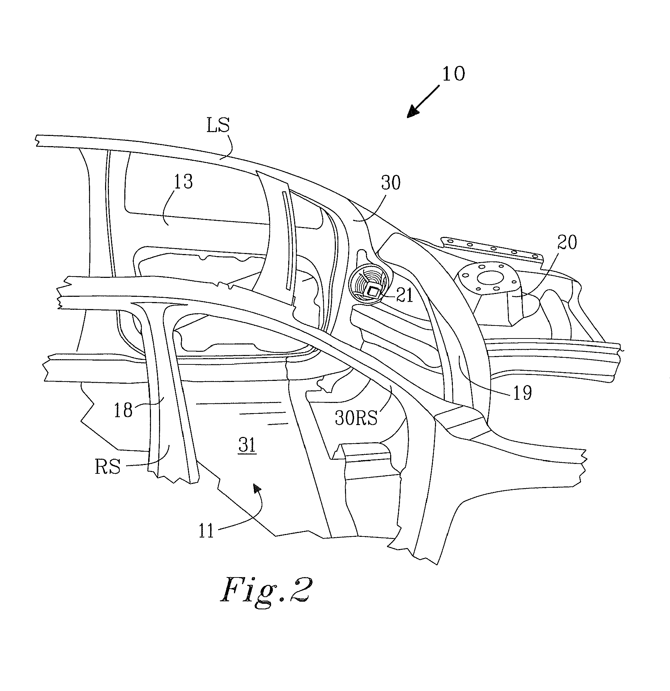

Figure 2 shows parts of the passenger compartment seen without the interior details such as the dashboard, the steering wheel, the seats or the like. These kind of interior items have been removed to more clearly illustrate the present invention. Figure 2 shows parts of a left side A-pillar 30, which is in the proximity of the left side LS of the automobile 10, in this case closest to the driver's side of the automobile 10. The A-pillar 30 can be separate or integrated into the structure of the body of the automobile 10. The A-pillar can for example be similar to the one described in the US patent no. 7,267,394 B1. As can be seen, the subwoofer 21 is mounted in/on the A-pillar using the interior volume of the A-pillar 30 as an enclosure, sometimes also referred to as the speaker box. Optionally the A-pillar can be arranged with a plurality of subwoofers, for example 1, 2, 3, 4, or more subwoofers 21. The position of the subwoofer 21 can be close to the floor 31 of the automobile for example, although in figure 2 it is positioned at a height H of about 40-50 cm above the floor 31 of the automobile 10.

Figure 2 further shows the interior of the front left door 13, parts of a B-pillar 18 on the right side RS of the automobile 10. An intermediate wall 19 separates the engine compartment 20 from the passenger compartment 11. A dashboard (not shown) can thereafter be arranged to cover the intermediate wall 19 and the subwoofer 21. Figure 2 also shows part of a right side A-pillar 30RS having a subwoofer 21 as described above (not shown).

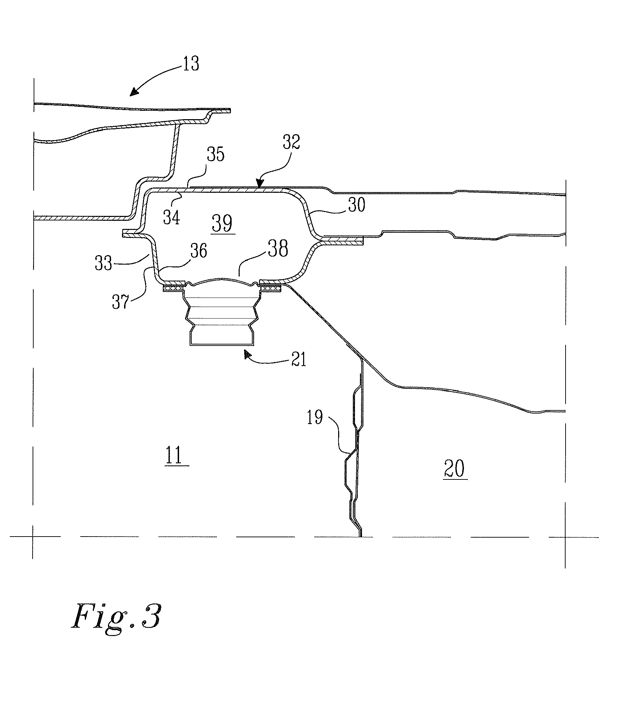

Figure 3 shows parts of a cross section of the A-pillar 30 on the left side LS of the automobile 10. The cross section is in the horizontal plane, hence figure 3 shows the A-pillar as seen from above, the same view as the automobile is shown in figure 1. The A-pillar 30 is in the shown embodiment according to the present invention, made form a first and a second metal wall 32, 33 welded together. Each of the first and second metal wall 32, 33 comprises an inner and an outer surface 34, 35, 36, 37. The second metal wall 33 is arranged closest to the passenger compartment 11 while the first metal wall 32 is arranged furthest away from the passenger compartment 11. The second metal wall 33 is equipped with an aperture 38 above which the subwoofer 21 is superpositioned. The first and the second metal wall 32, 33 further defines an interior volume 39 of the A-pillar 30.The front left door 13 is arranged in the proximity of the A-pillar 31 on the left side LS. On the opposite side of the A-pillar 30, the intermediate wall 19 is arranged adjacent the engine compartment 20.

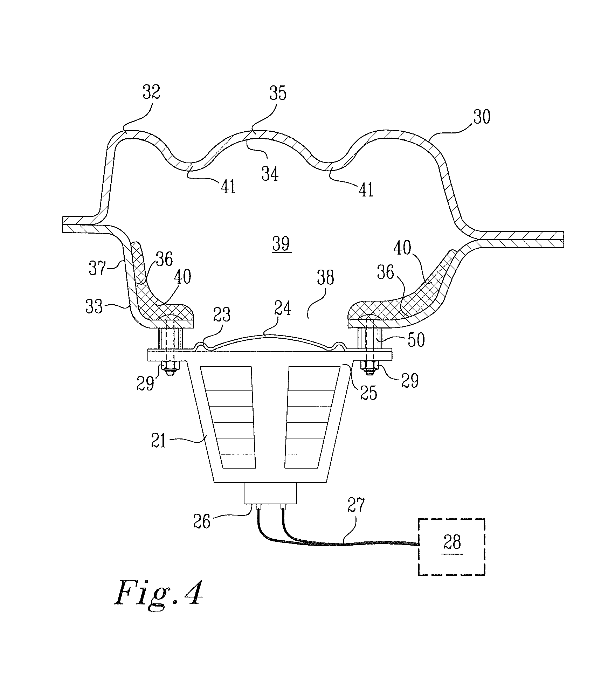

Figure 4 shows the cross section of figure 3 in greater detail. The same reference numerals will be used for the same features. The subwoofer 21, more generally referred to as a driver, generally comprises a diaphragm 23 with a dust cap 24, the diaphragm 23 is flexibly arranged on a frame 25, sometimes referred to as a basket or a chassis. A pole piece, spider and a voice coil 26 and lead wires 27 for connection with a media module 28, such as an energy source, amplifier and/or a media player, is also present. The frame 25 comprises a circumferential flange extending around the diaphragm 23 for attachment to the second metal wall 33 via bolts or screws 29 and in the proximity of the aperture 38. As such, the A-pillar 30, or at least the parts of the A-pillar 30, forms an enclosure, also referred to as a speaker box, for the subwoofer 21. An air tight sealing member 50 is arranged between the subwoofer 21 and the second metal wall 33 of the A-pillar 30, to prevent any sound waves from escaping the interior 39 of the A-pillar 30. By this, not only does the A-pillar 30 provide a place to mount the first subwoofer 21 but also prevents, or at least reduces, sound waves from the front of the first subwoofer 21 from interfering destructively with those from the back. Doing so typically causes cancellations, e.g. an acoustic short circuit, and significantly improves the level and sound quality at low frequencies and especially at frequencies below 200 Hz.

By front of the subwoofer 21, or when referred to as a driver, is meant that side on which the diaphragm is positioned, in this case diaphragm 23, while back is the opposite side, in this case that side of the pole piece, spider and a voice coil 26. As is noticed, the diaphragm 23 is positioned substantially in the plane of the second metal wall 33 at the aperture 38 of the A-pillar 30 with the frame 25 facing away from the second metal wall 33 extending towards the interior of the passenger compartment 11. This has been shown to be very space saving, since the interior volume 39 of the A-pillar is usually quite restricted. Although it is well within the boundaries of the present invention that the frame 25 extends into the enclosure, in this case it is the interior volume 39 of the A-pillar, which defines the enclosure together with the metal walls 32, 33.

The A-pillar 30, functioning as an enclosure to the driver 21, contains the radiation from the pole piece, spider and a voice coil 26 thereby preventing transmission of the sound emitted from the rear of the subwoofer 21 by confining the sound in a substantially rigid box, defined by the interior volume 39 of the A-pillar 30 and the surrounding metal walls 32, 33. The thickness T of the first and second metal wall 32, 33, i.e. the wall of the A-pillar 30, can be adapted to reduce transmission of sound through the first and second metal wall 32, 33 of the A-pillar 30 while at the same time provide for a rigid safe A-pillar structure for the automobile 10.

Each of the inner surfaces 34, 36 of the first and second metal wall 32, 33 can be arranged with lossy wall material, internal bracings, visco-elastic materials (e.g. mineral loaded bitumen), coatings, or thin lead sheets to prevent sound form penetrating the walls of the A-pillar 30. To prevent the inner surfaces 34, 36 from reflecting sound, which potentially can be transmitted back through the frame 25 and the diaphragm 23, again resulting in degradation of sound quality, internal absorption material 40 can be positioned within the A-pillar 30, for absorbing the sound. Examples of absorbing material, often called "damping" material are; fiberglass, wool or synthetic fiber batting, combinations thereof, or the like.

The internal shape of the interior volume 39 of the A-pillar 30 can also be designed to reduce or reflect sound away from the frame 25 and the diaphragm 23 to a location where it can be absorbed or at least provide less interference. For example, as shown in figure 3, protrusions 41 can be arranged on the inner surface 34 of the first metal wall 32, and/or on the inner surface 36 of the second metal wall 33. The protrusions 41 can be designed to that they also have a supportive function to the rigidity of the A-pillar 30. By this, an improved sound quality is achieved while at the same time improving, or at least not reducing, the structural integrity of the A-pillar 30, for example provided by the aperture 38 in the second metal wall 33 of the A-pillar 30. The protrusions 41 can be formed by folds in the A-pillar or as attached material pieces to the inner surface 34. Combinations of protrusions formed from the material of the A-pillar or from separate material are of course also possible. One main purpose of the protrusions is to reflect sound to a location where it can be absorbed or at least provide less interference. As it is desirable to have a large interior volume of the enclosure, i.e. the interior of the A-pillar 30, the protrusions 41 can be formed to extend away from the centre of the interior volume 39 of the A-pillar 30, this enables an increase of the interior volume 39 while still providing means for diverting sound. The A-pillar 30 can thus be formed to direct sound or with means for directing sound in a designated direction.

Furthermore, an A-pillar, as described above for example, may be provided with at least one wall defining a volume and constituting at least a part of the driver enclosure which at least one wall does not constitute a wall of the A-pillar, i.e. an A-pillar may be arranged to contain at least part of a driver enclosure within its wall(s).

## Claims

1. A-pillar for an automobile,
**characterized in**
**that** said A-pillar having at least one electro acoustical transducer arrangement, said arrangement comprises a driver (21) and a driver enclosure, and in that said A-pillar (30) comprises at least one wall (32,33) defining a volume (39) and in that said driver enclosure is at least partly defined or at least partly contained by at least a part of said wall (32,33) and said volume (39) of said A-pillar (30).

2. The A-pillar according to claim 1, **characterized in that** said volume (39) of said A-pillar (30) is the interior volume of said A-pillar (30).

3. The A-pillar according to claim 1 or 2, **characterized in that** said driver (21) is a subwoofer.

4. The A-pillar according to claim 3, **characterized in that** said subwoofer reproduces frequencies below 200 Hz.

5. The A-pillar according to any preceding claims, **characterized in that** said at least one wall (32, 33) comprises at least one aperture (38) and **in that** said driver (21) is arranged to substantially cover said aperture (38).

6. The A-pillar according to claim 5, **characterized in that** said driver (21) comprises a diaphragm (23) and a frame (25), basket or chassis, and **in that** said diaphragm (23) is arranged facing towards said volume (39) of said A-pillar (30).

7. The A-pillar according to claim 5 or 6, **characterized in that** said driver (21) comprises a diaphragm (23) and a frame (25), basket or chassis, and **in that** said diaphragm (23) is arranged facing away from said volume (39) of said A-pillar (30).

8. The A-pillar according to any preceding claims, **characterized in that** said A-pillar comprises at least two drivers (21).

9. The A-pillar according to any preceding claims, **characterized in that** a substantially air tight sealing member (50) is arranged between the driver (21) and said A-pillar (30).

10. The A-pillar according to any preceding claims, **characterized in that** said A-pillar comprises a sound absorbing material.

11. The A-pillar according to any preceding claims, **characterized in that** said A-pillar is adapted to direct sound in a designated direction.

12. An automobile comprising at least one A-pillar according to any preceding claims.

13. The automobile according to claim 12, **characterized in that** said automobile comprises two A-pillars according to any preceding claims.
